**Europäisches Patentamt**

**European Patent Office**

**Office européen des brevets**

(19)

(11) **EP 1 521 391 A1**

(12) **EUROPÄISCHE PATENTANMELDUNG**

(43) Veröffentlichungstag:
    **06.04.2005 Patentblatt 2005/14**

(51) Int Cl.⁷: **H04L 12/14**

(21) Anmeldenummer: **03022539.5**

(22) Anmeldetag: **02.10.2003**

(84) Benannte Vertragsstaaten:
    **AT BE BG CH CY CZ DE DK EE ES FI FR GB GR HU IE IT LI LU MC NL PT RO SE SI SK TR**
    Benannte Erstreckungsstaaten:
    **AL LT LV MK**

(71) Anmelder: **SIEMENS AKTIENGESELLSCHAFT**
    **80333 München (DE)**

(72) Erfinder: **Prade, Johannes, Dr.**
    **84130 Dingolfing (DE)**

(54) **Verfahren zur Vergebührung von Verbindungen in einem Kommunikationsnetz**

(57)    Verfahren zur Vergebührung von Verbindungen in einem Kommunikationsnetz, demgemäß

a) von einem Media Gateway Controller periodisch Verbindungsabfragen an ein Media Gateway gestellt werden, wobei mit jeder Verbindungsabfrage alle von dem Media Gateway Controller als aktiv registrierten Verbindungen abgefragt werden,
b) bezüglich der Vergebührung einer Verbindung ablaufende Registrierungsmaßnahmen fortgesetzt werden, wenn aufgrund des Ergebnisses der Abfrage die Verbindung weiterhin als aktiv erkannt wird,
c) bezüglich der Vergebührung einer Verbindung über den Zeitraum der letzte Abfrage-Periode bereits durchgeführte Registrierungsmaßnahmen zurückgenommen werden (rückgängig gemacht werden), wenn aufgrund des Ergebnisses der Abfrage die Verbindung als nicht mehr aktiv erkannt wird.

**EP 1 521 391 A1**

**Beschreibung**

In den neuen Netzwerkstrukturen, die üblicherweise als "Next Generation Networks" bezeichnet werden, lösen sich die ehemals monolithischen vermittlungstechnischen Einheiten, allgemein Vermittlungsstellen genannt, in dezentrale autonome Komponenten (Netzelemente) auf.

Die verschiedenen Netzelemente können physikalisch recht weit auseinander liegen und sind meistens über ein Paketnetz, genauer ein IP-Netz, steuerungstechnisch miteinander verbunden.

Die Aufgabenteilung ist dabei so, dass ein zentraler Controller (Media Gateway Controller MGC) die ihm zugeordneten Netzelemente, sogenannte Gateways jeder beliebigen Art, steuert. Die Steuerung der Gateways durch den Controller erfolgt über standardisierte Protokolle, zum Beispiel MGCP, H.248, H.323, SIP, etc..

Der Verbindungsaufbau für den Daten- oder Sprachstrom zwischen zwei Endpunkten wird zwar vom MGC gesteuert, die Datenund Sprachströme selbst laufen aber direkt zwischen den Gateways (Endpunkten) und nicht mehr über den MGC.

Bei diesem Funktionssplitt fällt dem Controller immer noch die Aufgabe zu, eine korrekte und exakte Vergebührung vorzunehmen. Dazu ist es erforderlich, dass der MGC umgehend von einem Gateway davon in Kenntnis gesetzt wird, wenn ein Gespräch oder eine Datenverbindung beendet wird. Nun ist es zum einen eine intrinsische Eigenschaft in den Paketnetzen, dass Nachrichten verloren gehen, und zum anderen, dass die Protokolle Lücken für eine jederzeit exakte Vergebührung aufweisen.

Dies führt in den MGC nicht nur zu technisch sehr aufwändigen und kostenintensiven Lösungen, sondern auch zu nicht regelkonformen Vergebührungsdaten.

Gegenwärtiger Stand der Technik ist, dass man versucht das Ende oder auch den Abbruch einer bestehenden Verbindung möglichst ereignisnah zu erkennen und dann die Vergebührung zu stoppen. Die Zeit zwischen dem tatsächlichen Verbindungsende und dem Erkennen des Endes muss deshalb so kurz wie möglich gehalten werden.

Dazu müssen auf dem MGC entsprechende Testverfahren und Prüfmechanismen implementiert werden. Um den Rechenaufwand dafür nicht zu groß und deshalb zu kostspielig werden zu lassen, liegen die Abstände zwischen den Prüfzyklen heute bei 20 Sekunden.

Das bedeutet, dass Gespräche, deren Vergebührung über einen solchen Test- und Prüfmechanismus gestoppt werden mussten, bis zu 20 Sekunden längere Gesprächsdauern bekommen, als sie tatsächlich beanspruchten. Dadurch ergibt sich eine unerwünschte Übervergebührung.

Betrachtet man z.B. die Forderung des Regulators im Bereich der deutschen Telefonnetzbetreiber über die Synchronität von Uhren (siehe Telekommunikationsverordnung §5), die besagt, dass innerhalb einer Vermittlungsstelle die Uhren auf den Einheiten, auf denen Vergebührungsdaten entstehen, nicht mehr als eine Sekunde von einander abweichen dürfen, dann dürfte die Zeit zwischen zwei Testzyklen nicht größer als 1 Sekunde sein, um eine Übervergebührung deterministisch zu vermeiden.

Der Erfindung liegt die Aufgabe zugrunde, eine Übervergebührung ohne großen technischen Aufwand zu vermeiden.

Die Erfindung besteht aus drei Maßnahmen, die im folgenden erläutert werden:

1) Anstatt die Gateways in immer kürzeren Abständen (z.B. 1 mal pro Sekunde) zu testen, um zu erkennen ob ein Gespräch eventuell schon beendet wurde, wird die Zeit zwischen zwei Abfragen wesentlich verlängert, zum Beispiel auf 1 mal pro 2 Minuten.

2) Nach Ablauf von jeweils 2 Minuten werden alle im MGC als aktiv geführten Verbindungen geprüft. Es gibt also nur noch einen Timer.

3) Wird dabei festgestellt, dass die Verbindung immer noch aktiv ist, ist alles o.k., die Vergebührung läuft normal weiter. Wird dagegen festgestellt, dass diese Verbindung im Gateway gar nicht mehr existiert, wird diese Verbindung im MGC sofort gestoppt und im Gebührenzähler GZ für diese Verbindung das Minimum der beiden Werte 120 Sekunden und aufgelaufener Gebührenzählerstand in Sekunden abgezogen, also

$$GZ(neu) = GZ(alt) - Min\{120sec, GZ(alt)\}.$$

Anmerkung: Die Zeit von 120 Sekunden (2 Minuten) als Testzykluszeit ist nur ein Beispiel. Die Testzykluszeit soll eine vom Netzbetreiber pro MGC administrierbare Größe sein. So kann der Betreibe eine für seine regulatorischen Anforderungen und seine Vergebührungsphilosophie am besten angepasste Größe einstellen.

Verschiedene Analysen der Qualität heutiger Paketnetze zeigen, dass man mit einer Güte von 99,99% rechnen kann. Daraus folgt für das hier gelöste Problem, dass bei maximal jeder 10000 Verbindung eine Adjustierung des Gebührenzählers erfolgen wird und dass diese Adjustierung auf alle Fälle den regulatorischen Bedingungen genügt, dass nämlich keine Übervergebührung durchgeführt wird.

Es ist auch ganz offensichtlich , dass das vorgeschlagene Verfahren die benötigte Rechenkapazität drastisch reduziert und die benötigte Bandbreite im Paketnetz für die Signalisierungsnachrichten vermindert.

Die Erfindung bietet folgende Vorteile bzw. Verbesserungen gegenüber den bisherigen Ansätzen:

1. Das Pollen der Gateways erfordert erhebliche permanente Rechenleistung, deren Umfang mit der geforderten oder gewünschten Genauigkeit der Vergebührung ansteigt. Diese Kosten werden drastisch reduziert.

2. Die Gebührendaten können nun regelkonform erstellt werden, Übervergebührung wird unterbunden. Dies sichert den Netzbetreiber vor Schadenersatzforderungen.

3. Die notwendige Bandbreite im Signalisierungsnetz wird verringert.

4. Die Implementierungen auf dem MGC werden einfacher.

Im folgenden wird ein Anwendungsbeispiel der Erfindung erläutert, das unter dem Titel Voice over DSL oder VoDSL von vielen Telekommunikationsnetzbetreibern implementiert oder geplant wird. Bei dem Anwendungsbeispiel handelt es sich um die Technik zur Realisierung eines Sprachdienstes, sozusagen das Pendant zum herkömmlichen Telefondienst POTS oder ISDN. Bei dieser Technik hat der Telefonendkunde ein kleines Gerät bei sich zu Hause stehen, an das z.B. ein herkömmliches analoges (POTS) oder digitales (ISDN) Endgerät angeschlossen werden kann. Darüber hinaus hat dieses Gerät auch eine Datennetzwerkschnittstelle und bietet die Möglichkeit zusätzlich z.B. einen Computer, anzuschließen. Ein solches Geräte wird allgemein als IAD, Integrated Access Device, bezeichnet. Der Verbindungsaufbau für ein Telefongespräch von einem solchen IAD wird vom MGC gesteuert.
Die Übertragung sowohl des Datenverkehrs als auch des Sprachverkehrs erfolgt hierbei paketorientiert und basiert heute in den allermeisten Fällen auf der IP-Technologie. Ebenso wird dieses Paketnetz für die Signalisierungsverbindung zum MGC genutzt. Als Steuerprotokoll kommt meistens der MGCP-Standard zum Einsatz. Die Signalisierungsendpunkte sind zwischen den zwei IADs der beiden Telefonendpunkte und dem MGC. Der Sprachstrom - in Paketen verpackt - läuft direkt zwischen zwei IADs.
Aus dem Erlangwert der VoDSL-Teilnehmer, aus der mittleren Belegungsdauer und aus der Anzahl von VoDSL-Teilnehmern, die an einem MGC verwaltet werden, kann man leicht erschließen, welchen Rechenaufwand es erfordert, aktive Gespräche nach der bisherigen Technik zu testen und zu vergebühren.
Die Vergebührung/Gebührentickets werden üblicherweise im MGC, der den A-Teilnehmer bedient, generiert. Die beschriebene Polling-Überwachung lässt sich aber natürlich auch im MGC, der den B-Teilnehmer bedient, realisieren. Erkennt dann im Fehlerfall der B-seitige MGC das Ende der Verbindung ohne dass vorher eine Clear_Connection vom B-Teilnehmer oder vom A-seitigen MGC kam, so kann der B-seitige MGC

a) schneller ein Clear Connection zur A-Seite schikken und
b) eine Information an den A-seitigen MGC schikken, wie lange die Verbindung max. schon abgebrochen ist.

Für Letzteres wären die Standards für die Zwischenamtsignalisierung (z.B. ISUP, SIP-T, etc.) zu erweitern. Es soll neu die Zeit des eigenen (B-seitigen) Pollingtimers als Zusatzinformation im z.B. im Clear_Connection übertragen werden.
Ein weiteres Anwendungsbeispiel für die Erfindung sind Internet-Sessions, die nicht nach Datenvolumen, sondern nach Dauer abgerechnet werden.

**Patentansprüche**

1. Verfahren zur Vergebührung von Verbindungen in einem Kommunikationsnetz, demgemäß

a) von einem Media Gateway Controller periodisch Verbindungsabfragen an ein Media Gateway gestellt werden, wobei mit jeder Verbindungsabfrage alle von dem Media Gateway Controller als aktiv registrierten Verbindungen abgefragt werden,
b) bezüglich der Vergebührung einer Verbindung ablaufende Registrierungsmaßnahmen fortgesetzt werden, wenn aufgrund des Ergebnisses der Abfrage die Verbindung weiterhin als aktiv erkannt wird,
c) bezüglich der Vergebührung einer Verbindung über den Zeitraum der letzte Abfrage-Periode bereits durchgeführte Registrierungsmaßnahmen zurückgenommen werden (rückgängig gemacht werden), wenn aufgrund des Ergebnisses der Abfrage die Verbindung als nicht mehr aktiv erkannt wird.

2. Verfahren nach Anspruch 1,
**dadurch gekennzeichnet,**
**dass** die genannten Registrierungsmaßnahmen mithilfe eines Zählers durchgeführt werden.

3. Media Gateway Controller, der

a) periodisch Verbindungsabragen an ein Media Gateway stellt, wobei er mit einer Verbindungsabfrage alle von ihm als aktiv registrierten Verbindungen abfrägt,
b) bezüglich der Vergebührung einer Verbindung ablaufende Registrierungsmaßnahmen fortsetzt, wenn er aufgrund des Ergebnisses der Abfrage die Verbindung weiterhin als aktiv erkennt,
c) bezüglich der Vergebührung einer Verbindung die für die letzte Periode bereits durchgeführte Registrierungsmaßnahmen zurücknimmt (rückgängig macht), wenn er aufgrund des Ergebnisses der Abfrage die Verbindung als nicht mehr aktiv erkennt.

# EP 1 521 391 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 363 065 B1 (BHATIA RAJIV ET AL) 26. März 2002 (2002-03-26) <br> * Spalte 42, Zeile 26 - Zeile 38 * <br> * Spalte 29, Zeile 46 - Spalte 30, Zeile 4 * <br> ----- | 1-3 | H04L12/14 |

| | |
|---|---|
| | **RECHERCHIERTE SACHGEBIETE (Int.Cl.7)** |
| | H04L |

Der vorliegende Recherchenbericht wurde für alle Patentansprüche erstellt

| Recherchenort | Abschlußdatum der Recherche | Prüfer |
|---|---|---|
| BERLIN | 11. März 2004 | Siebel, C |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 02 2539

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2004

| Im Recherchenbericht angeführtes Patentdokument | Datum der Veröffentlichung | Mitglied(er) der Patentfamilie | Datum der Veröffentlichung |
|---|---|---|---|
| US 6363065 B1 | 26-03-2002 | AU 1466101 A<br>CN 1390408 T<br>EP 1234410 A1<br>JP 2003514439 T<br>TW 536882 B<br>WO 0135579 A1<br>US 2002101860 A1 | 06-06-2001<br>08-01-2003<br>28-08-2002<br>15-04-2003<br>11-06-2003<br>17-05-2001<br>01-08-2002 |

Für nähere Einzelheiten zu diesem Anhang : siehe Amtsblatt des Europäischen Patentamts, Nr.12/82

EPO FORM P0461